# EUROPÄISCHE PATENTSCHRIFT

(11) **EP 3 433 902 B1**
(45) Veröffentlichungstag und Bekanntmachung des Hinweises auf die Patenterteilung: **28.10.2020**
(21) Anmeldenummer: 17710906.3
(22) Anmeldetag: 15.03.2017
(51) Int. Cl.: H01R 13/00, H01R 13/533, B60L 53/16, B60L 53/302, H01R 24/38

(54) **STECKVERBINDERTEIL MIT EINEM GEKÜHLTEN KONTAKTELEMENT**
CONNECTOR EQUIPPED WITH A COOLING ELEMENT
UN CONNECTEUR ÉQUIPÉ DU SYSTÈME DE REFROIDISSEMENT

(30) Priorität: 22.03.2016 DE 102016105347
(43) Veröffentlichungstag der Anmeldung: 30.01.2019
(73) Patentinhaber: Phoenix Contact e-Mobility GmbH, 32816 Schieder-Schwalenberg (DE)
(72) Erfinder: MOSEKE, Dirk, 37671 Höxter-Lüchtringen (DE)
(74) Vertreter: Muth, Bruno
(86) Internationale Anmeldenummer: PCT/EP2017/056063
(87) Internationale Veröffentlichungsnummer: WO 2017/162494

(56) Entgegenhaltungen:
- EP-A1- 2 104 183
- WO-A1-2009/134379
- WO-A2-2012/051510

## Beschreibung

Die Erfindung betrifft ein Steckverbinderteil zum Verbinden mit einem Gegensteckverbinderteil nach dem Oberbegriff des Anspruchs 1.

Ein derartiges Steckverbinderteil umfasst ein Kontaktelement zum elektrischen Kontaktieren mit einem zugeordneten Gegenkontaktelement des Gegensteckverbinderteils. Das Kontaktelement weist einen Kontaktabschnitt zum Kontaktieren mit dem Gegenkontaktelement des Gegensteckverbinderteils und einen Schaftabschnitt zum Anschließen einer Lastleitung zum Übertragen eines elektrischen Stroms auf.

Ein solches Steckverbinderteil kann insbesondere als Ladestecker oder als Ladebuchse zum Aufladen eines elektrisch angetriebenen Fahrzeugs (auch bezeichnet als Elektrofahrzeug) Verwendung finden. In diesem Fall ist beispielsweise ein Kabel einerseits an eine Ladestation angeschlossen und trägt andererseits das Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

Ladeströme können grundsätzlich als Gleichströme oder als Wechselströme übertragen werden, wobei insbesondere Ladeströme in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Steckverbinderteils führen können.

Ein aus der DE 10 2010 007 975 B4 bekanntes Ladekabel weist eine Kühlmittelleitung auf, die eine Zuleitung und eine Rückleitung für ein Kühlmittel umfasst und somit einen Kühlmittelfluss hin und zurück in dem Ladekabel ermöglicht. Die Kühlmittelleitung der DE 10 2010 007 975 B4 dient hierbei zum einen zum Abführen von an einem Energiespeicher eines Fahrzeugs entstehender Verlustwärme, zudem aber auch zum Kühlen des Kabels an sich. Die WO 2009/134379 A1 beschreibt einen Ladestecker, welcher über ein Kabel mit einer Ladesäule verbunden ist. Dabei ist ein Kühlungssystem vorgesehen. Die WO 2012/051510 A2 offenbart ein mit einem Gegensteckverbinder verbindbaren Steckverbinder, wobei in den beiden Gehäusehälften jeweils ein Kühlkanal ausgebildet ist, so dass das Kühlmittel in eine Flussrichtung von dem Gegensteckverbinder in den Steckverbinder strömen kann.

Bei einem Ladesystem zum Aufladen eines Elektrofahrzeugs entsteht Wärme nicht nur an dem Kabel, mit dem ein Ladestecker beispielsweise mit einer Ladestation verbunden ist, sondern auch an dem Ladestecker und insbesondere innerhalb des Ladesteckers beispielsweise an Kontaktelementen, über die ein elektrischer Kontakt mit zugeordneten Gegenkontaktelementen beispielsweise auf Seiten einer Ladebuchse an einem Elektrofahrzeug hergestellt wird, wenn der Ladestecker in die Ladebuchse eingesteckt ist. Solche Kontaktelemente, die aus einem elektrisch leitfähigen Metallmaterial, beispielsweise aus einem Kupferwerkstoff, gefertigt sind, erwärmen sich, wenn ein Ladestrom über die Kontaktelemente fließt, wobei grundsätzlich die Kontaktelemente in Abhängigkeit von dem zu übertragenden Ladestroms so zu dimensionieren sind, dass die Kontaktelemente eine hinreichende Stromtragfähigkeit aufweisen und eine Erwärmung an den Kontaktelementen begrenzt ist. Hierbei gilt, dass ein Kontaktelement umso größer zu dimensionieren ist, je größer der zu übertragende Ladestrom ist.

Einer Skalierung der Kontaktelementgröße mit steigendem Ladestrom sind jedoch aufgrund des damit einhergehenden Bauraumbedarfs, des Gewichts und der Kosten Grenzen gesetzt. Es besteht daher ein Bedürfnis danach, einen großen Ladestrom mit einem vergleichsweise klein dimensionierten Kontaktelement zu übertragen.

Bei einem aus der WO 2015/119791 A1 bekannten Ladesystem zum Aufladen eines Elektrofahrzeugs sind innerhalb eines Ladekabels Kühlmittelleitungen geführt, über die Wärme auch aus dem Bereich eines an das Ladekabel angeschlossenen Steckverbinderteils abgeführt werden kann.

Bei einem aus der US 8,835,782 bekannten Kontaktelement sind Kühlrippen an einem Schaft des Kontaktelements angeordnet.

Aufgabe der vorliegenden Erfindung ist es, ein Steckverbinderteil mit einem Kontaktelement zur Verfügung zu stellen, das eine große Stromtragfähigkeit beispielsweise zur Verwendung in einem Ladesystem zum Aufladen eines Elektrofahrzeugs aufweisen kann.

Diese Aufgabe wird durch einen Gegenstand mit den Merkmalen des Anspruchs 1 gelöst.

Demnach weist das Steckverbinderteil einen in dem Kontaktelement erstreckten Kanal auf, mit dem zumindest eine Kühlmittelleitung strömungsverbindbar ist, zum Führen eines Kühlmittels durch das Kontaktelement.

Durch Vorsehen des Kanals in dem Kontaktelement kann ein Kühlmittel unmittelbar durch das Kontaktelement hindurch geleitet werden. Auf diese Weise wird eine Kühlung unmittelbar dort bereitgestellt, wo im Betrieb des Steckverbinderteils bei Leiten eines elektrischen Stroms über das Kontaktelement Wärme entsteht.

Ist das Steckverbinderteil beispielsweise als Ladestecker ausgebildet und ist an das Kontaktelement eine Lastleitung zum Übertragen eines Ladestroms, beispielsweise eines Gleichstroms, angeschlossen, so kommt es bei einem Ladevorgang zu einer Erwärmung an dem Kontaktelement. Dadurch, dass ein Kühlmittel durch den Kanal des Kontaktelements hindurch geleitet werden kann, kann diese Wärme an dem Kontaktelement aufgenommen und von dem Kontaktelement abgeführt werden, was ermöglicht, das Kontaktelement bei großer Stromtragfähigkeit vergleichsweise klein zu dimensionieren.

Das Kontaktelement ist vorzugsweise aus Metall gefertigt und weist einen einstückigen Körper auf, der den Kontaktabschnitt, beispielsweise in Form einer Kontaktbuchse oder eines Kontaktstücks, und den Schaftabschnitt ausbildet. In diesen einstückigen Körper ist der Kanal eingeformt, beispielsweise indem eine Bohrung in den Körper eingebracht ist. Der Kanal erstreckt sich somit innerhalb des Körpers, sodass ein Kühlmittel durch den Körper hindurch geleitet und somit einer Erwärmung des Körpers entgegengewirkt werden kann.

Das Kontaktelement kann beispielsweise eine im Wesentlichen zylindrische Grundform aufweisen. Entsprechend kann auch der Schaftabschnitt, über den eine Lastleitung an das Kontaktelement anzuschließen ist, zylindrisch geformt sein, sodass eine Lastleitung beispielsweise in den Schaftabschnitt eingesteckt oder auf den Schaftabschnitt aufgesteckt werden kann, um elektrisch mit dem Kontaktelement zu kontaktieren.

Der Kanal kann in diesem Fall beispielsweise koaxial zu dem Schaftabschnitt erstreckt sein, sodass sich der Kanal axial in dem Kontaktelement erstreckt und somit ein Kühlmittel längs durch das Kontaktelement strömen kann.

Der Kanal stellt eine geschlossene Führung für das Kühlmittel bereit, sodass das Kühlmittel über eine mit dem Kanal strömungsverbundene Kühlmittelleitung in den Kanal eingeleitet und über eine andere mit dem Kanal strömungsverbundene Kühlmittelleitung aus dem Kanal abgeleitet werden kann. Es wird somit einen Kühlmittelfluss durch den Kanal bereitgestellt, mittels dessen Wärme an dem Kontaktelement aufgenommen und in geführter Weise abgeleitet werden kann.

Der Kanal kann beispielsweise ein erstes Ende, mit dem eine erste Kühlmittelleitung strömungsverbindbar ist, und ein zweites Ende, mit dem eine zweite Kühlmittelleitung strömungsverbindbar ist, aufweisen. Der Kanal ist ausgebildet, ein Kühlmittel zwischen dem ersten Ende und den zweiten Ende zu führen, sodass mittels des Kanals ein Strömungsweg innerhalb des Kontaktelements bereitgestellt und das Kontaktelement somit mit einem Kühlmittel durchströmt werden kann.

Zum Anschließen der ersten Kühlmittelleitung kann das Kontaktelement beispielsweise einen Ansetzstutzen aufweisen, der radial innerhalb des Schaftabschnitts erstreckt ist. Der Ansetzstutzen kann beispielsweise koaxial zu dem Schaftabschnitt sein, wobei der Schaftabschnitt z.B. einen Hohlzylinder ausbildet und die Kühlmittelleitung in einen Zwischenraum zwischen den radial äußeren Schaftabschnitt und den radial inneren Ansetzstutzen eingesteckt werden kann, um auf diese Weise eine Strömungsverbindung zwischen der Kühlmittelleitung und dem innerhalb des Ansetzstutzens erstreckten Kanal herzustellen.

Über die mit dem Ansetzstutzen verbundene erste Kühlmittelleitung kann ein Kühlmittel beispielsweise zugeführt werden. Diese erste Kühlmittelleitung kann sich hierbei beispielsweise innerhalb eines elektrisch leitfähigen Leitungsmantels der Lastleitung erstrecken, sodass die Kühlmittelleitung innerhalb der Lastleitung geführt ist und damit Wärme auch an der Lastleitung aufnehmen kann. Zum Anschließen der Lastleitung mit der darin geführten Kühlmittelleitung an das Kontaktelement ist der Leitungsmantel der Lastleitung beispielsweise auf den Schaftabschnitt des Kontaktelements aufgesteckt und beispielsweise über ein Hülsenelement mit dem Schaftabschnitt verpresst. Die Kühlmittelleitung ist hingegen an den Ansetzstutzen angesetzt und darüber mit dem in dem Kontaktelement erstreckten Kanal strömungsverbunden.

Um einen Kühlmittelkreislauf bereitzustellen, ist an das Kontaktelement vorzugsweise ein Verbindungselement angesetzt, das mit dem Kanal strömungsverbunden ist und an das die zweite Kühlmittelleitung anschließbar ist. Die zweite Kühlmittelleitung kann beispielsweise zum Ableiten des Kühlmittels dienen, sodass durch Zuführen des Kühlmittels über die erste Kühlmittelleitung und durch Ableiten des Kühlmittels über die zweite Kühlmittelleitung ein Kühlmittelkreislauf bereitgestellt wird.

Das Verbindungselement kann aus Kunststoff oder Metall gefertigt sein. Das Verbindungselement kann beispielsweise die Form eines L-Stücks aufweisen, mit einem darin eingeformten Strömungskanal, der mit dem Kanal des Kontaktelements in Strömungsverbindung steht und somit ein Ableiten des Kühlmittels aus dem Kanal ermöglicht.

In einer Ausgestaltung ist das Steckverbinderteil mit einem Kabel verbunden, in dem eine an das Kontaktelement angeschlossene Lastleitung und zumindest eine Kühlmittelleitung geführt ist. Ist das Steckverbinderteil beispielsweise als Ladestecker ausgebildet, so kann das Kabel eine Verbindung beispielsweise mit einer Ladestation herstellen, sodass das Steckverbinderteil mit einem zugeordneten Gegensteckverbinderteil zum Beispiel in Form einer Ladebuchse auf Seiten eines Elektrofahrzeugs eingesteckt werden kann, um auf diese Weise eine elektrische Verbindung zwischen der Ladestation und dem Elektrofahrzeug herzustellen, um Batterien des Elektrofahrzeugs aufzuladen.

Die Lastleitung kann, in einer Ausführungsform, einen elektrisch leitenden Leitungsmantel aufweisen, innerhalb dessen eine Kühlmittelleitung geführt ist. Der Leitungsmantel kann beispielsweise durch ein Kupferlitzengeflecht (bzw. Kupferlitzen) verwirklicht sein und dient zum Übertragen des Laststroms. Dadurch, dass eine Kühlmittelleitung koaxial innerhalb des Leitungsmantels erstreckt ist, kann über in der Kühlmittelleitung strömendes Kühlmittel Wärme unmittelbar an der Lastleitung aufgenommen werden, um eine Erwärmung entlang der Lastleitung zumindest zu reduzieren. Dadurch, dass ein Kühlmittel die innerhalb der Lastleitung verlegte Kühlmittelleitung und zudem auch ein mit der Lastleitung verbundenes Kontaktelement durchströmt, kann eine Kühlung sowohl an der Lastleitung als auch an dem mit der Lastleitung verbundenen Kontaktelement bereitgestellt werden.

Der Leitungsmantel kann beispielsweise auf den Schaftabschnitt des Kontaktelements aufgesteckt sein, sodass der Leitungsmantel den Schaftabschnitt umfänglich zumindest teilweise umgibt. Der Leitungsmantel ist somit mit dem Schaftabschnitt elektrisch kontaktiert, wobei die Verbindung beispielsweise über ein Hülsenelement, das mit dem Schaftabschnitt verpresst ist, gesichert sein kann.

Während der Leitungsmantel der Lastleitung auf den Schaftabschnitt aufgesteckt ist, ist die in dem Leitungsmantel der Lastleitung geführte Kühlmittelleitung vorzugsweise an einen zum Schaftabschnitt koaxialen, radial inneren Ansetzstutzen angesetzt und auf diese Weise an das Kontaktelement angeschlossen. Über den Ansetzstutzen ist die Kühlmittelleitung mit dem in dem Kontaktelement erstreckten Kanal strömungsverbunden, sodass ein Kühlmittel über die Kühlmittelleitung in den Kanal einströmen kann.

Um einen Kühlmittelkreislauf bereitzustellen, ist in dem Kabel vorzugsweise eine weitere Kühlmittelleitung geführt, die sich außerhalb der Lastleitung erstreckt und somit gesondert von der Lastleitung in dem Kabel verlegt ist. Diese weitere Kühlmittelleitung ist ebenfalls an das Kontaktelement angeschlossen und steht mit dem Kanal in Strömungsverbindung, sodass über diese weitere Kühlmittelleitung beispielsweise ein Kühlmittel aus dem Kanal des Kontaktelements abgeleitet werden kann.

Ein zur Kühlung verwendetes Kühlmittel kann beispielsweise gasförmig oder flüssig sein. Beispielsweise kann ein Luftstrom zur Kühlung bereitgestellt werden, der in den Kanal eingeleitet und aus dem Kanal abgeleitet wird, um auf diese Weise einen Kühlkreislauf bereitzustellen.

Ein Steckverbinderteil der hier beschriebenen Art ist beispielsweise als Ladestecker oder Ladebuchse im Rahmen eines Ladesystems zum Aufladen eines Elektrofahrzeugs einsetzbar. Ein solches Steckverbinderteil kann beispielsweise an einem Ladekabel angeordnet und über das Ladekabel mit einer Ladestation verbunden sein. Ein Ladestecker dieser Art kann beispielsweise in eine Ladebuchse auf Seiten eines Elektrofahrzeugs eingesteckt werden, um Ladeströme zwischen der Ladestation und dem Elektrofahrzeug zu übertragen.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ladesystems zum Aufladen eines Elektrofahrzeugs;
- Fig. 2: eine Ansicht eines Steckverbinderteils in Form eines Ladesteckers;
- Fig. 3: eine Ansicht einer zwei Kontaktelemente umfassenden Unterbaugruppe des Steckverbinderteils;
- Fig. 4: eine gesonderte Ansicht der Kontaktelemente;
- Fig. 5: eine gesonderte Explosionsansicht eines Kontaktelements;
- Fig. 6: eine Schnittansicht entlang der Linie A-A gemäß Fig. 5; und
- Fig. 7: eine andere Schnittansicht entlang der Linie A-A gemäß Fig. 5.

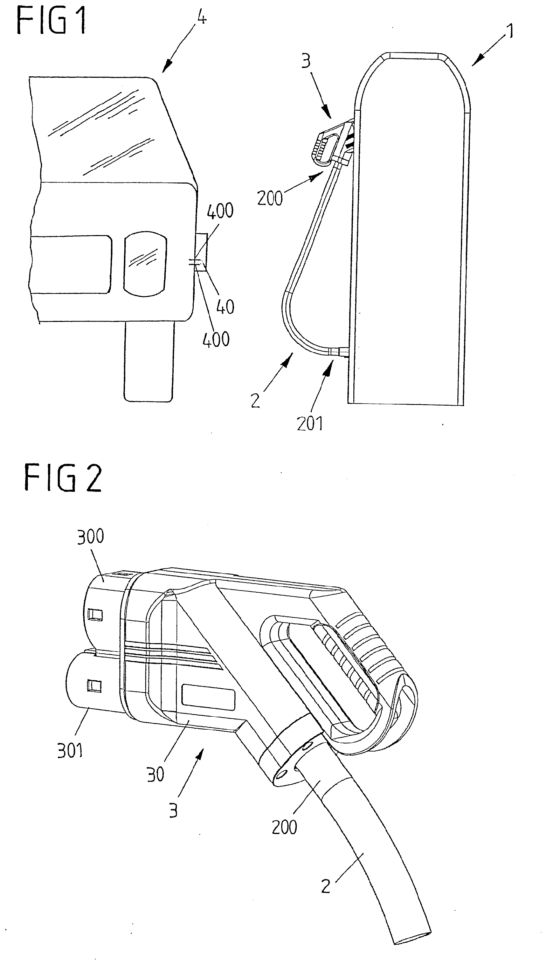

Fig. 1 zeigt eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Steckverbinderteil 3 in Form eines Ladesteckers verbunden ist.

Wie aus der vergrößerten Ansicht gemäß Fig. 2 ersichtlich, weist das Steckverbinderteil 3 an einem Gehäuse 30 Steckabschnitte 300, 301 auf, mit denen das Steckverbinderteil 3 steckend mit einem zugeordneten Gegensteckverbinderteil 40 in Form einer Ladebuchse an dem Fahrzeug 4 in Eingriff gebracht werden kann. Auf diese Weise kann die Ladestation 1 elektrisch mit dem Fahrzeug 4 verbunden werden, um Ladeströme von der Ladestation 1 hin zu dem Fahrzeug 4 zu übertragen.

Um ein zügiges Aufladen des Elektrofahrzeugs 4 z.B. im Rahmen eines sogenannten Schnellladevorgangs zu ermöglichen, weisen die übertragenen Ladeströme eine große Stromstärke, z.B. größer als 200 A, gegebenenfalls sogar in der Größenordnung von 350 A oder darüber, auf. Aufgrund solch hoher Ladeströme kommt es an dem Kabel 2 und auch am Steckverbinderteil 3 sowie der Ladebuchse 40 zu thermischen Verluste(n), die zu einem Erwärmen des Kabels 2, des Steckverbinderteils 3 und der Ladebuchse 40 führen können.

Das Steckverbinderteil 3 weist, an seinen Steckabschnitten 300, 301, eine Mehrzahl von Kontaktelementen auf. Beispielsweise können an dem Steckabschnitt 301 zwei Kontaktelemente zum Übertragen eines Ladestroms in Form eines Gleichstroms angeordnet sein, während an dem Steckabschnitt 300 beispielsweise Kontaktelemente zur Bereitstellung eines erdenden PE-Kontakts und von Signalkontakten zum Übertragen von Steuersignalen angeordnet sein können.

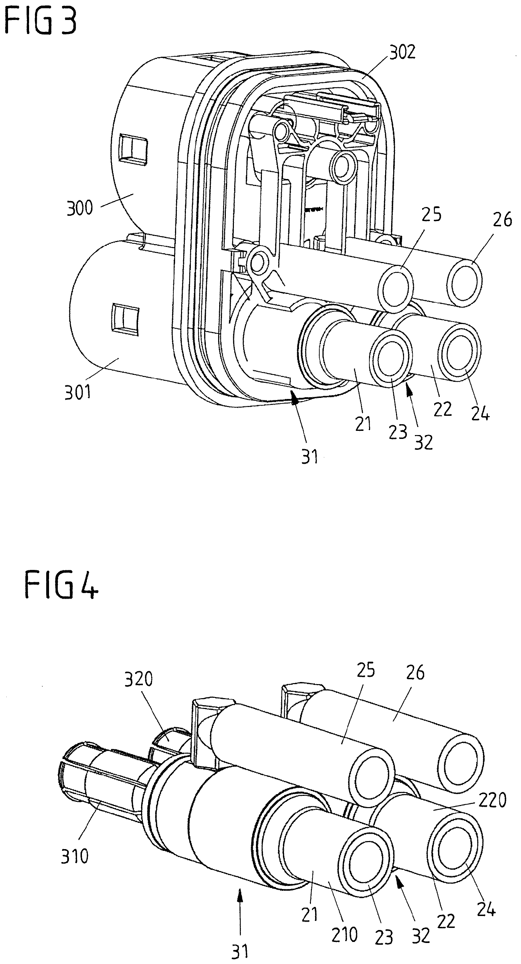

Fig. 3 zeigt ein Ausführungsbeispiel einer Unterbaugruppe des Steckverbinderteils 3, mit einem Gehäuseteil 302, an dem die Steckabschnitte 300, 301 ausgebildet sind. An dem Gehäuseteil 302 sind unter anderem zwei Kontaktelemente 31, 32 angeordnet, die mit Kontaktabschnitten 310, 320 (siehe Fig. 4) in den unteren Steckabschnitt 301 hineinragen und das Steckgesicht ausbilden, das bei Einstecken des Steckverbinderteils 3 in das zugeordnete Gegensteckverbinderteil 40 mit Gegenkontaktelementen 400 des Gegensteckverbinderteils 40 (siehe Fig. 1) elektrisch kontaktieren kann. So gelangen die als Kontaktbuchsen ausgebildeten Kontaktabschnitte 310, 320 der Kontaktelemente 31, 32 bei Einstecken des Steckverbinderteils 3 in das Gegensteckverbinderteil 40 mit den als Kontaktstifte ausgebildeten Gegenkontaktelementen 400 in Eingriff, sodass eine elektrische Kontaktierung zwischen den Kontaktelementen 31, 32 und den Gegenkontaktelementen 400 hergestellt wird.

Bei dem in Fig. 4 bis 7 dargestellten Ausführungsbeispiel der Kontaktelemente 31, 32 sind in dem Kabel 2 geführte Lastleitungen 21, 22 an die Kontaktelemente 31, 32 angeschlossen. Diese Lastleitungen 21, 22 dienen zum Übertragen eines elektrischen (Gleich-)Stroms zwischen der Ladestation 1 und dem Elektrofahrzeug 4 und weisen jeweils einen elektrisch leitenden, von einer elektrischen Isolierung ummantelten Leitungsmantel 210, 220 beispielsweise in Form eines Kupferlitzengeflechts auf, der an einen Schaftabschnitt 312 des zugeordneten Kontaktelements 31, 32 angesetzt und auf diese Weise elektrisch mit dem Kontaktelement 31, 32 kontaktiert ist.

Zur mechanisch festen Verbindung des Leitungsmantels 210, 220 mit dem Schaftabschnitt 312 ist ein zylindrisches, aus Metall gefertigtes Hülsenelement 314 derart an den Schaftabschnitt 312 angesetzt, dass der auf den Schaftabschnitt 312 aufgesteckte Leitungsmantel 210, 220 über das Hülsenelement 314 mit dem Schaftabschnitt 312 pressend verbunden ist. Das Hülsenelement 114 kann hierbei nach Ansetzen an den Schaftabschnitt 312 unter Verwendung einer geeigneten Pressvorrichtung unter Zwischenlage des Leitungsmantels 210, 220 mit dem Schaftabschnitt 312 verpresst sein.

Innerhalb des Leitungsmantels 210, 220 ist eine Kühlmittelleitung 23, 24 geführt, die somit koaxial innerhalb der Lastleitung 21, 22 aufgenommen und geführt ist. Auf diese Weise kann über ein die Kühlmittelleitung 23, 24 durchströmendes Kühlmittel Wärme unmittelbar an der Lastleitung 21, 22 aufgenommen und von der Lastleitung 21, 22 abgeführt werden, um ein (übermäßiges) Erwärmen der Lastleitung 21, 42 entlang ihrer in dem Kabel 2 erstreckten Länge zu vermeiden.

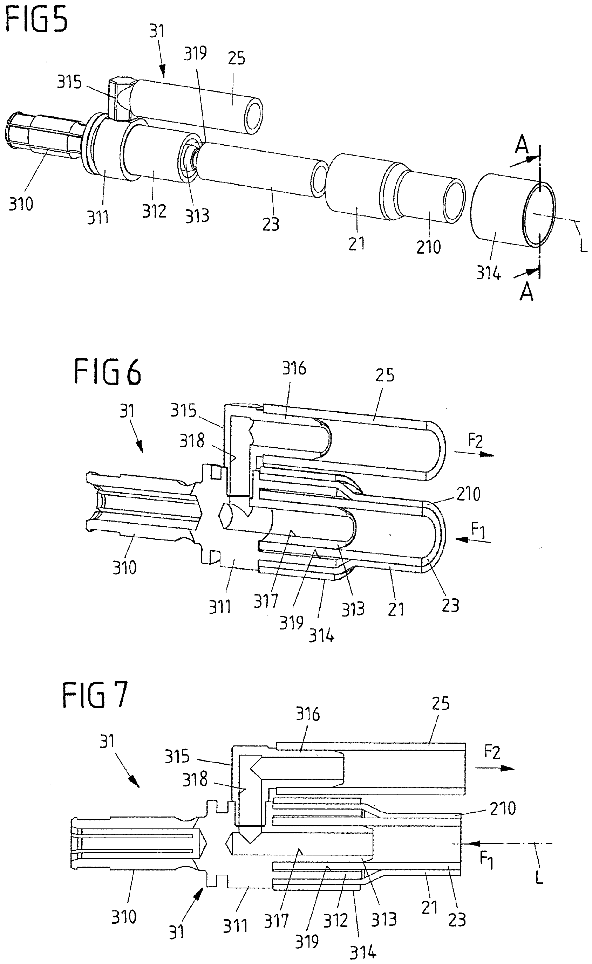

Wie in Fig. 5 bis 7 für das Kontaktelement 31 dargestellt, ist die Kühlmittelleitung 23, 24 eines jeden Kontaktelements 31, 32 an einen radial innerhalb des zylindrischen Schaftabschnitts 312 angeordneten Ansetzstutzen 313 angesetzt, indem die Kühlmittelleitung 23, 24 in einen zwischen dem Ansetzstutzen 313 und dem Schaftabschnitt 312 gebildeten umfänglichen Zwischenraum 319 eingesteckt ist. Die Kühlmittelleitung 23, 24 ist auf diese Weise mit einem innerhalb des Ansetzstutzens 313 erstreckten Kanal 317 des Kontaktelements 31, 32 strömungsverbunden, sodass ein Kühlmittel zwischen der Kühlmittelleitung 23, 24 und dem Kanal 317 strömen kann.

Die Kontaktelemente 31, 32 weisen eine im Wesentlichen zylindrische Grundform auf, mit einer die Zylinderachse ausbildenden Längsachse L. Entlang dieser Längsachse L können die Kontaktelemente 31, 32 steckend mit den zugeordneten Gegenkontaktelementen 400 in Eingriff gebracht werden, und entlang dieser Längsachse L schließen die Lastleitungen 21, 22 an die Kontaktelemente 31, 32 an.

Das Kontaktelement 31, 32 ist einstückig als metallener Körper ausgebildet und weist einen an den Kontaktabschnitt 310, 320 anschließenden Zylinderabschnitt 311 auf, von dem der Schaftabschnitt 312 axial vorsteht. Der Kanal 317 ist, koaxial zu dem zylindrischen Schaftabschnitt 312 und zu dem Zylinderabschnitt 311, beispielsweise in Form einer Bohrung in das Kontaktelement 31, 32 eingeformt und erstreckt sich innerhalb des Kontaktelements 31, 32. Mittels eines den Kanal 317 durchströmenden Kühlmittels kann somit Wärme an dem Kontaktelement 31, 32 aufgenommen und von dem Kontaktelement 31, 32 abgeführt werden.

An den Zylinderabschnitt 311 ist ein Verbindungselement 315 in Form eines L-Stücks angesetzt, das einen Strömungskanal 318 aufweist, der in Strömungsverbindung mit dem in das Kontaktelement 31, 32 eingeformten Kanal 317 steht. An einen an dem Verbindungselement 315 ausgebildeten Ansetzstutzen 316 ist eine weitere Kühlmittelleitung 25, 26 angesetzt, sodass auch diese weitere Kühlmittelleitung 25, 26 mit dem Kanal 317 in Strömungsverbindung ist und somit ein Kühlmittelkreislauf bereitgestellt werden kann.

Beispielsweise kann, wie in Fig. 6 und 7 eingezeichnet, ein Kühlmittel über die koaxial innerhalb der Lastleitung 21, 22 verlegte Kühlmittelleitung 23, 24 zugeführt werden und somit in eine Flussrichtung F1 in den Kanal 317 einströmen. Über das Verbindungselement 315 strömt das Kühlmittel aus dem Kanal 317 aus und wird über die Kühlmittelleitung 25, 26 in eine Flussrichtung F2 abgeleitet, sodass sich ein Kühlmittelstrom durch das Kontaktelement 31, 32 ergibt.

Über diesen Kühlmittelstrom wird Wärme sowohl an der Lastleitung 21, 22 als auch an dem mit der Lastleitung 21, 22 verbundenen Kontaktelement 31, 32 aufgenommen. Als Kühlmittel kann beispielsweise ein gasförmiges Fluid, zum Beispiel Luft, verwendet werden, wobei auch denkbar und möglich ist, eine (elektrisch nicht leitende) Kühlmittelflüssigkeit zu verwenden.

Während die Kühlmittelleitungen 23, 24 koaxial innerhalb der mit den Kontaktelementen 31, 32 elektrisch verbundenen Lastleitungen 21, 22 verlegt sind, erstrecken sich die Kühlmittelleitungen 25, 26, die an die Verbindungselemente 315 der Kontaktelemente 31, 32 angeschlossen sind, außerhalb der Lastleitungen 21, 22. Sowohl die Lastleitungen 21, 22 mit den darin geführten Kühlmittelleitungen 23, 24 als auch die weiteren Kühlmittelleitungen 25, 26 sind innerhalb des Kabels 2 verlegt und erstrecken sich somit vonseiten der Ladestation 1 bis hin zum Steckverbinderteil 3.

Der der Erfindung zugrunde liegende Gedanke ist nicht auf die vorangehend geschilderten Ausführungsbeispiele beschränkt, sondern lässt sich grundsätzlich auch bei gänzlich andersgearteten Ausführungsformen verwirklichen.

Ein Steckverbinderteil der hier beschriebenen Art kann im Rahmen eines Ladesystems zum Aufladen eines Elektrofahrzeugs zum Einsatz kommen. Denkbar und möglich ist aber auch, ein Steckverbinderteil der hier beschriebenen Art in anderen Anwendungen zum steckenden Verbinden mit einem zugeordneten Gegensteckverbinderteil einzusetzen.

Dadurch, dass ein Kanal zum Leiten eines Kühlmittels unmittelbar in ein Kontaktelement eingebracht ist, wird eine Kühlung unmittelbar an dem Kontaktelement bereitgestellt. Wärme kann somit effektiv an dem Kontaktelement aufgenommen und von dem Kontaktelement abgeleitet werden.

Dadurch, dass zudem eine Kühlmittelleitung innerhalb einer Lastleitung erstreckt ist, kann Wärme auch effektiv an der Lastleitung aufgenommen werden. Dadurch, dass die Kühlmittelleitung koaxial innerhalb der Lastleitung erstreckt ist, liegt die Kühlmittelleitung innenseitig großflächig an einem stromführenden Leitungsmantel der Lastleitung an, sodass Wärme effektiv in die Kühlmittelleitung und ein darin geführtes Kühlmittel eingeleitet werden kann.

Obwohl vorangehend eine Kühlung von zur Übertragung von Gleichstrom dienenden Kontaktelementen beschrieben worden ist, ist dies nicht beschränkend. Grundsätzlich kann eine Kühlung der hier beschriebenen Art auch an Kontaktelementen, die zur Übertragung eines Wechselstroms dienen, verwendet werden.

### Bezugszeichenliste

- 1: Ladestation
- 2: Ladekabel
- 200, 201: Ende
- 21, 22: Lastleitung
- 210, 220: Elektrisch leitender Leitungsmantel
- 23-26: Kühlmittelleitung
- 3: Ladestecker
- 30: Gehäuse
- 300, 301: Steckabschnitt
- 302: Gehäuseteil
- 31, 32: Kontaktelement (Lastkontakt)
- 310, 320: Kontaktabschnitt (Buchse)
- 311: Zylinderabschnitt
- 312: Schaftabschnitt
- 313: Ansetzstutzen
- 314: Hülsenelement
- 315: Verbindungselement
- 316: Ansetzstutzen
- 317: Kanal
- 318: Kanal
- 319: Zwischenraum
- 4: Fahrzeug
- 40: Ladebuchse
- 400: Gegenkontaktelement
- F1, F2: Flussrichtung
- L: Längsachse

## Patentansprüche

1. Steckverbinderteil (3) zum Verbinden mit einem Gegensteckverbinderteil (40), mit
- einem Kontaktelement (31, 32) zum elektrischen Kontaktieren mit einem zugeordneten Gegenkontaktelement (400) des Gegensteckverbinderteils (40), wobei das Kontaktelement (31, 32) einen Kontaktabschnitt (310) zum Kontaktieren mit dem Gegenkontaktelement (400) des Gegensteckverbinderteils (40) und einen Schaftabschnitt (312) zum Anschließen einer Lastleitung (21, 22) zum Übertragen eines elektrischen Stroms aufweist, und
- einem in dem Kontaktelement (31, 32) erstreckten Kanal (317), mit dem zumindest eine Kühlmittelleitung (23-26) strömungsverbindbar ist, zum Führen eines Kühlmittels durch das Kontaktelement (31, 32),
wobei der Kanal (317) ein erstes Ende, mit dem eine erste Kühlmittelleitung (23, 24) strömungsverbindbar ist, und ein zweites Ende, mit dem eine zweite Kühlmittelleitung (25, 26) strömungsverbindbar ist, aufweist, wobei der Kanal ausgebildet ist, ein Kühlmittel zwischen dem ersten Ende und dem zweiten Ende zu führen, wobei das Kühlmittel über die koaxial innerhalb der Lastleitung (21, 22) verlegte erste Kühlmittelleitung (23, 24) zugeführt wird und in eine Flussrichtung (F1) in den Kanal (317) einströmt und wobei das Kühlmittel über ein Verbindungselement (315) aus dem Kanal (317) ausströmt und über die zweite Kühlmittelleitung (25, 26) in eine Flussrichtung (F2) abgeleitet wird, so dass sich ein Kühlmittelstrom durch das Kontaktelement (31, 32) ergibt,
**dadurch gekennzeichnet, dass** das mit dem Kanal (317) strömungsverbundene Verbindungselement (315), an welches die zweite Kühlmittelleitung (25, 26) anschließbar ist, an das Kontaktelement (31, 32) angesetzt ist, wobei das Verbindungselement (315) die Form eines L-Stücks aufweist mit einem darin eingeformten Strömungskanal, der mit dem Kanal (317) des Kontaktelements (31, 32) in Strömungsverbindung steht und ein Ableiten des Kühlmittels aus dem Kanal (317) ermöglicht.

2. Steckverbinderteil (3) nach Anspruch 1, **dadurch gekennzeichnet, dass** das Kontaktelement (31, 32) einen den Kontaktabschnitt (310) und den Schaftabschnitt (312) ausbildenden, einstückigen Körper aufweist, in den der Kanal (317) eingeformt ist.

3. Steckverbinderteil (3) nach Anspruch 1 oder 2, **dadurch gekennzeichnet, dass** der Schaftabschnitt (312) zylindrisch geformt ist.

4. Steckverbinderteil (3) nach Anspruch 3, **dadurch gekennzeichnet, dass** der Kanal (317) koaxial zu dem Schaftabschnitt (312) erstreckt ist.

5. Steckverbinderteil (3) nach einem der Ansprüche 1 bis 4, **dadurch gekennzeichnet, dass** das Kontaktelement (31, 32) einen Ansetzstutzen (313) aufweist, der radial innerhalb des Schaftabschnitts (312) erstreckt ist und an den die erste Kühlmittelleitung (23, 24) zur Strömungsverbindung mit dem Kanal (317) anschließbar ist.

6. Baugruppe, **gekennzeichnet durch** ein Steckverbinderteil (3) nach einem der vorangehenden Ansprüche und ein mit dem Steckverbinderteil (3) verbundenes Kabel (2), das eine an das Kontaktelement (31, 32) angeschlossene Lastleitung (21, 22) und zumindest eine Kühlmittelleitung (23-26) führt.

7. Baugruppe nach Anspruch 6, **dadurch gekennzeichnet, dass** die Lastleitung (21, 22) einen elektrisch leitenden Leitungsmantel (210) aufweist und eine Kühlmittelleitung (23, 24) koaxial innerhalb des Leitungsmantels (210) geführt ist.

8. Baugruppe nach Anspruch 7, **dadurch gekennzeichnet, dass** der Leitungsmantel (210) auf den Schaftabschnitt (312) des Kontaktelements (31, 32) derart aufgesteckt ist, dass der Leitungsmantel (210) den Schaftabschnitt (312) umfänglich zumindest teilweise umgibt.

9. Baugruppe nach Anspruch 7 oder 8, **dadurch gekennzeichnet, dass** die koaxial innerhalb des Leitungsmantels (210) geführte Kühlmittelleitung (23, 24) derart an das Kontaktelement (31, 32) angeschlossen ist, dass die Kühlmittelleitung (23, 24) mit dem Kanal (317) des Kontaktelements (31, 32) strömungsverbunden ist.

10. Baugruppe nach einem der Ansprüche 7 bis 9, **dadurch gekennzeichnet, dass** in dem Kabel (2) eine weitere Kühlmittelleitung (25, 26) geführt ist, die außerhalb der Lastleitung (21, 22) erstreckt und derart an das Kontaktelement (31, 32) angeschlossen ist, dass die zweite Kühlmittelleitung (25, 26) mit dem Kanal (317) strömungsverbunden ist.

## Claims

1. Plug connector part (3) for connection to a mating plug connector part (40), comprising
- a contact element (31, 32) for making electrical contact with an associated mating contact element (400) of the mating plug connector part (40), wherein the contact element (31, 32) has a contact section (310) for making contact with the mating contact element (400) of the mating plug connector part (40) and has a shaft section (312) for connection of a load line (21, 22) for transmitting an electric current, and
- a duct (317), which extends in the contact element (31, 32) and to which at least one coolant line (23-26) can be connected in terms of flow, for carrying a coolant through the contact element (31, 32),
wherein the duct (317) has a first end, to which a first coolant line (23, 24) can be connected in terms of flow, and a second end, to which a second coolant line (25, 26) can be connected in terms of flow, wherein the duct is designed to carry a coolant between the first end and the second end, wherein the coolant is supplied via the first coolant line (23, 24), which is laid coaxially within the load line (21, 22), and flows into the duct (317) in a flow direction (F1), and wherein the coolant flows out of the duct (317) via a connecting element (315) and is discharged via the second coolant line (25, 26) in a flow direction (F2), so that a coolant flow is produced through the contact element (31, 32),
**characterized in that** the connecting element (315), which is connected in terms of flow to the duct (317) and to which the second coolant line (25, 26) can be connected, is fitted on the contact element (31, 32), wherein the connecting element (315) is in the form of an L-shaped piece with a flow duct integrally formed therein, which flow duct is connected in terms of flow to the duct (317) of the contact element (31, 32) and allows the coolant to be discharged from the duct (317).

2. Plug connector part (3) according to Claim 1, **characterized in that** the contact element (31, 32) has a one-piece body which forms the contact section (310) and the shaft section (312) and in which the duct (317) is integrally formed.

3. Plug connector part (3) according to Claim 1 or 2, **characterized in that** the shaft section (312) is formed in a cylindrical manner.

4. Plug connector part (3) according to Claim 3, **characterized in that** the duct (317) extends coaxially in relation to the shaft section (312).

5. Plug connector part (3) according to one of Claims 1 to 4, **characterized in that** the contact element (31, 32) has a fitting port (313) which extends radially within the shaft section (312) and to which the first coolant line (23, 24) can be connected to form a connection in terms of flow with the duct (317).

6. Assembly **characterized by** a plug connector part (3) according to one of the preceding claims and a cable (2) which is connected to the plug connector part (3) and guides a load line (21, 22), which is connected to the contact element (31, 32), and at least one coolant line (23-26).

7. Assembly according to Claim 6, **characterized in that** the load line (21, 22) has an electrically conductive line sheath (210) and a coolant line (23, 24) is guided coaxially within the line sheath (210).

8. Assembly according to Claim 7, **characterized in that** the line sheath (210) is mounted onto the shaft section (312) of the contact element (31, 32) in such a way that the line sheath (210) at least partially surrounds the circumference of the shaft section (312).

9. Assembly according to Claim 7 or 8, **characterized in that** the coolant line (23, 24) which is guided coaxially within the line sheath (210) is connected to the contact element (31, 32) in such a way that the coolant line (23, 24) is connected in terms of flow to the duct (317) of the contact element (31, 32).

10. Assembly according to one of Claims 7 to 9, **characterized in that** a further coolant line (25, 26) is guided in the cable (2), which further coolant line extends outside the load line (21, 22) and is connected to the contact element (31, 32) in such a way that the second coolant line (25, 26) is connected in terms of flow to the duct (317).

## Revendications

1. Partie de connecteur à enfichage (3) destinée à être reliée à une partie de connecteur à enfichage homologue (40), comprenant
- un élément de contact (31, 32) destiné à venir en contact électrique avec un élément de contact homologue (400) associé de la partie de connecteur à enfichage homologue (40), l'élément de contact (31, 32) possédant une portion de contact (310) servant à établir le contact avec l'élément de contact homologue (400) de la partie de connecteur à enfichage homologue (40) et une portion de tige (312) servant au raccordement d'une ligne de charge (21, 22) destinée à la transmission d'un courant électrique, et
- un canal (317) qui s'étend dans l'élément de contact (31, 32), auquel peut être reliée fluidiquement au moins une conduite à fluide de refroidissement (23-26), servant à guider un fluide de refroidissement à travers l'élément de contact (31, 32),
le canal (317) possédant une première extrémité, à laquelle peut être reliée fluidiquement une première conduite à fluide de refroidissement (23, 24), et une deuxième extrémité, à laquelle peut être reliée fluidiquement une deuxième conduite à fluide de refroidissement (25, 26), le canal étant configuré pour guider un fluide de refroidissement entre la première extrémité et la deuxième extrémité, le fluide de refroidissement étant amené par le biais de la première conduite à fluide de refroidissement (23, 24) posée de manière coaxiale à l'intérieur de la ligne de charge (21, 22) et pénétrant dans le canal (317) dans une direction d'écoulement (F1) et le fluide de refroidissement s'écoulant hors du canal (317) par le biais d'un élément de liaison (315) et étant dérivé dans une direction d'écoulement (F2) par le biais de la deuxième conduite à fluide de refroidissement (25, 26), de sorte qu'il se produit un courant de fluide de refroidissement à travers l'élément de contact (31, 32),
**caractérisée en ce que** l'élément de liaison (315) relié fluidiquement au canal (317), auquel peut être raccordée la deuxième conduite à fluide de refroidissement (25, 26), est ajusté contre l'élément de contact (31, 32), l'élément de liaison (315) présentant la forme d'une pièce en L dans laquelle est façonné un canal d'écoulement qui se trouve en liaison fluidique avec le canal (317) de l'élément de contact (31, 32) et permet une dérivation du fluide de refroidissement hors du canal (317) .

2. Partie de connecteur à enfichage (3) selon la revendication 1, **caractérisée en ce que** l'élément de contact (31, 32) possède un corps monobloc qui forme la portion de contact (310) et la portion de tige (312) et dans lequel est façonné le canal (317).

3. Partie de connecteur à enfichage (3) selon la revendication 1 ou 2, **caractérisée en ce que** la portion de tige (312) est de forme cylindrique.

4. Partie de connecteur à enfichage (3) selon la revendication 3, **caractérisée en ce que** le canal (317) s'étend de manière coaxiale par rapport à la portion de tige (312).

5. Partie de connecteur à enfichage (3) selon l'une des revendications 1 à 4, **caractérisée en ce que** l'élément de contact (31, 32) possède une tubulure d'ajustement (313) qui s'étend dans le sens radial à l'intérieur de la portion de tige (312) et à laquelle peut être raccordée la première conduite à fluide de refroidissement (23, 24) en vue d'une liaison fluidique avec le canal (317).

6. Sous-ensemble, **caractérisé par** une partie de connecteur à enfichage (3) selon l'une des revendications précédentes et un câble (2) relié à la partie de connecteur à enfichage (3), lequel amène une ligne de charge (21, 22) raccordée à l'élément de contact (31, 32) et au moins une conduite à fluide de refroidissement (23-26) .

7. Sous-ensemble selon la revendication 6, **caractérisé en ce que** la ligne de charge (21, 22) possède une gaine de ligne (210) électriquement conductrice et une conduite à fluide de refroidissement (23, 24) chemine de manière coaxiale à l'intérieur de la gaine de ligne (210).

8. Sous-ensemble selon la revendication 7, **caractérisé en ce que** la gaine de ligne (210) est emmanchée sur la portion de tige (312) de l'élément de contact (31, 32) de telle sorte que la gaine de ligne (210) entoure circonférentiellement au moins en partie la portion de tige (312).

9. Sous-ensemble selon la revendication 7 ou 8, **caractérisé en ce que** la conduite à fluide de refroidissement (23, 24) qui chemine de manière coaxiale à l'intérieur de la gaine de ligne (210) est raccordée à l'élément de contact (31, 32) de telle sorte que la conduite à fluide de refroidissement (23, 24) est en liaison fluidique avec le canal (317) de l'élément de contact (31, 32).

10. Sous-ensemble selon l'une des revendications 7 à 9, **caractérisé en ce qu'**une conduite à fluide de refroidissement (25, 26) supplémentaire passe dans le câble (2), laquelle s'étend en-dehors de la ligne de charge (21, 22) et est raccordée à l'élément de contact (31, 32) de telle sorte que la deuxième conduite à fluide de refroidissement (25, 26) est en liaison fluidique avec le canal (317).
